(19) **Europäisches Patentamt / European Patent Office / Office européen des brevets**

(11) **EP 2 790 841 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **12812892.3**

(22) Anmeldetag: **06.12.2012**

(51) Int Cl.:
*G01F 1/34* (2006.01)     *G01F 1/38* (2006.01)
*G01F 1/50* (2006.01)     *B05C 11/10* (2006.01)
*B05B 12/08* (2006.01)

(86) Internationale Anmeldenummer:
**PCT/EP2012/074697**

(87) Internationale Veröffentlichungsnummer:
**WO 2013/087519 (20.06.2013 Gazette 2013/25)**

(54) **MESSVORRICHTUNG FÜR DIE BESTIMMUNG DES VOLUMENSTROMS VON LEIM IN EINER BELEIMUNGSVORRICHTUNG**

MEASURING DEVICE FOR DETERMINING THE VOLUMETRIC FLOW RATE OF GLUE IN A GLUING DEVICE

DISPOSITIF DE MESURE POUR DÉTERMINER LE DÉBIT VOLUMÉTRIQUE DE LA COLLE DANS UN DISPOSITIF D'ENCOLLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2011 DE 102011056357**

(43) Veröffentlichungstag der Anmeldung:
**22.10.2014 Patentblatt 2014/43**

(73) Patentinhaber: **Windmöller & Hölscher KG 49525 Lengerich/Westf. (DE)**

(72) Erfinder:
• **LAMKEMEYER, Andreas 49124 Georgsmarienhütte (DE)**
• **SEEBERGER, Achim 49525 Lengerich (DE)**

(56) Entgegenhaltungen:
**EP-A1- 1 683 582     EP-A1- 1 854 548
DE-A1- 10 065 608     DE-A1-102005 044 796
US-A- 4 848 657     US-A1- 2009 014 468
US-B1- 6 460 730**

## Beschreibung

Die vorliegende Erfindung betrifft eine Messvorrichtung für die Bestimmung des Volumens von Leim in einer Beleimungsvorrichtung für eine Vorrichtung, insbesondere eine Bodenlegevorrichtung oder eine Schlauchmaschine, zur Erzeugung von Säcken oder Sackhalbzeugen. Weiter betrifft die vorliegende Erfindung eine Beleimungsvorrichtung für eine solche Vorrichtung sowie ein Verfahren für die Bestimmung des Volumenstroms von Leim in einer Beleimungsvorrichtung.

Es ist bekannt, dass Beleimungsvorrichtungen für Vorrichtungen, insbesondere eine Bodenlegevorrichtung oder eine Schlauchmaschine, zur Erzeugung von Säcken oder Sackhalbzeugen verwendet werden. Dabei werden zum Beispiel Materialbahnen zu Schläuchen verklebt beziehungsweise Schlauchbahnen geschnitten und die Böden gelegt und verleimt. In beiden Fällen muss eine Verleimung des Materials stattfinden. Hierfür ist in definierter und möglichst exakter Weise ein Leimauftrag auf dem Material des Sackes beziehungsweise des Sackhalbzeuges notwendig. Üblicherweise sind Beleimungsvorrichtungen mit Auftragsköpfen und Auftragsventilen versehen. Damit kann in unterschiedlich komplexer Weise der Leimauftrag in Auftragsrichtung sowie teilweise auch quer zur Auftragsrichtung erfolgen. Eine solche Auftragsvorrichtung ist zum Beispiel aus der internationalen Veröffentlichung mit der Nummer WO 2005/002838 bekannt. Dort wird eine Bodenlegevorrichtung für Papiersäcke beschrieben, welche durch Verleimung den Boden solcher Papiersäcke herstellt. Für den Auftrag des Leims ist es wichtig, dass der Volumenstrom des Leims möglichst genau eingestellt wird, um den Auftrag, insbesondere die Auftragsdicke, des Leims möglichst konstant auf einem vordefinierten Sollwert zu halten. Dabei wird bei bekannten Leimungsvorrichtungen als Messvorrichtung üblicherweise ein Durchflussmesser, insbesondere mit relativ eingeschränktem Messbereich, verwendet.

Nachteilhaft bei bekannten Beleimungsvorrichtungen beziehungsweise den entsprechenden Messvorrichtungen ist es, dass sie in direktem Kontakt mit dem Leim stehen. Damit wird zwar einerseits eine relativ exakte Messmöglichkeit für den gewünschten Volumenstrom möglich, andererseits jedoch auch zumindest teilweise eine Beeinflussung durch die direkte Messung für den Volumenstrom des Leims erzeugt. Hinzu kommt, dass solche direkten Messmethoden des Volumenstroms üblicherweise relativ kostenintensive Sensoren erfordern. Damit führen bekannte Messvorrichtungen für die direkte Messung zur Beeinflussung des Volumenstroms und zu höheren Kosten.

Es ist Aufgabe der vorliegenden Erfindung, die voranstehend beschriebenen Nachteile zumindest teilweise zu beheben. Insbesondere ist es Aufgabe der vorliegenden Erfindung eine Messvorrichtung, eine Beleimungsvorrichtung sowie ein Verfahren für die Bestimmung des Volumenstroms von Leim zur Verfügung zu stellen, mit welchem in kostengünstiger und einfacher Weise der Volumenstrom bestimmt werden kann.

Voranstehende Aufgabe wird gelöst durch eine Messvorrichtung mit den Merkmalen des Anspruchs 1, durch eine Beleimungsvorrichtung mit den Merkmalen des Anspruchs 7 sowie durch ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die in Zusammenhang mit der erfindungsgemäßen Messvorrichtung beschrieben sind, selbstverständlich auch in Zusammenhang mit dem erfindungsgemäßen Verfahren sowie der erfindungsgemäßen Beleimungsvorrichtung und jeweils umgekehrt, so dass bezüglich der Offenbarung zu den einzelnen Erfindungsaspekten stets wechselseitig Bezug genommen wird beziehungsweise werden kann.

Eine erfindungsgemäße Messvorrichtung dient der Bestimmung des Volumenstroms von Leim in einer Beleimungsvorrichtung. Eine solche Beleimungsvorrichtung ist geeignet für eine Vorrichtung, insbesondere eine Bodenlegevorrichtung oder eine Schlauchmaschine, zur Erzeugung von Säcken oder Sackhalbzeugen. Eine erfindungsgemäße Messvorrichtung ermöglicht es, dass in indirekter Weise der Volumenstrom bestimmt wird. Hierfür ist bei einer erfindungsgemäßen Messvorrichtung ein Druckspeicher mit einem Gasvolumen und einem Leimvolumen vorgesehen, welches von dem Gasvolumen durch ein Druckausgleichselement, insbesondere eine flexible Membran, getrennt ist. Bei dem Druckausgleichselement handelt es sich insbesondere um ein zumindest abschnittsweise bewegliches Druckausgleichselement. Ein solches bewegliches Druckausgleichselement kann zum Beispiel ein Druckkolben beziehungsweise ein Druckkolbenkopf sein. Dieser ist zum Beispiel durch die Wandungen der Druckkammer geführt, um sich bei Druckunterschieden entsprechend dem Druckausgleich bewegen zu können. Das Leimvolumen weist einen Leimanschluss für den Anschluss an eine Leimleitung der Beleimungsvorrichtung auf. Darüber hinaus ist der Druckspeicher mit einem Drucksensor für die Bestimmung des Innendrucks im Druckspeicher versehen. Damit kann durch eine erfindungsgemäße Messvorrichtung der Innendruck im Druckspeicher bestimmt werden. Dieser Innendruck im Druckspeicher korreliert aufgrund des Vorsehens des Druckausgleichselements mit dem aktuellen Förderdruck des Leims in der Beleimungsvorrichtung. Wird die Förderung von Leim in der Beleimungsvorrichtung ausschließlich durch den Druck im Druckspeicher aufrecht erhalten und keine weitere Drucknacherzeugung durchgeführt, so sinkt der Druck im Druckspeicher während der Weiterförderung ab. Dies kann zum Beispiel durch die Verwendung eines Absperrventils erzielt werden, wodurch ausschließlich der Restdruck zur Weiterförderung des Volumenstroms von Leim dient. Durch das Absinken des Drucks kann über den Druckverlauf auch ein Volumenverlauf ermittelt werden. Insbesondere wird bei einer erfindungsgemäßen Messvorrichtung für die Bestimmung des Volumenstroms die ideale Gasgleichung verwendet. Dabei kann auf die grundlegende Formel

$$\frac{p \cdot V}{T} = const.$$

zurückgegriffen werden. Insbesondere werden bei einer erfindungsgemäßen Messvorrichtung zwei Drücke, zu Beginn und zu Ende einer Messung, miteinander verglichen. So kann zum Beispiel durch ein Absperrventil die Restdruckförderung aus dem Druckspeicher starten und damit einen Startdruck $p_1$ ergeben. Wird die Messung beendet, herrscht ein geringerer Druck als $p_1$, nämlich der sogenannte Enddruck $p_2$. Anschließend wird das Absperrventil wieder geöffnet, so dass der Normalbetrieb der Beleimungsvorrichtung stattfinden kann. Durch die zu vergleichenden Drücke und insbesondere den Vorfülldruck $p_0$ und unter der Annahme, dass die Temperatur bei dieser Messmethode keine Rolle spielt (isotherme Annahme), kann über die ideale Gasgleichung das gewünschte Differenzvolumen berechnet werden. Darüber hinaus wird die Zeitdifferenz zwischen den beiden Druckmesszeitpunkten für $p_1$ und $p_2$ ermittelt, so dass über das ermittelte Differenzvolumen und die entsprechende Zeitdifferenz der Volumenstrom des Leims bestimmt werden kann.

Es bleibt zusammenzufassen, dass mit einer erfindungsgemäßen Messvorrichtung eine indirekte Messung des Volumenstroms, also eine Bestimmung des Volumenstroms, möglich wird. Dafür wird ein relativ kostengünstiger und einfach herzustellender Drucksensor eingesetzt, welcher die direkte Messung durch aufwendige und kostenintensive Sensoren ersetzt. Um dies zu ermöglichen ist eine konstruktive Anordnung notwendig, wie sie durch eine erfindungsgemäße Messvorrichtung gegeben wird. Dadurch kann eine Korrelation von wenigstens zwei Drücken verwendet werden, die zu der Möglichkeit der indirekten Bestimmung des Volumenstroms von Leim in einer Beleimungsvorrichtung führt.

Grundsätzlich kann eine erfindungsgemäße Messvorrichtung selbstverständlich für jede Viskose, insbesondere für höher viskose Flüssigkeit eingesetzt werden. Dabei kann anstelle von Leim selbstverständlich auch jeder andere Klebstoff beziehungsweise jede andere viskose Flüssigkeit als zu messender Volumenstrom vorgesehen sein. Insbesondere handelt es sich jedoch um eine viskose Flüssigkeit, die eine stoffschlüssige Verbindung erzielen soll.

Der Leimanschluss einer erfindungsgemäßen Messvorrichtung kann lösbar oder unlösbar ausgebildet sein. Insbesondere bei Messvorrichtungen, die nachträglich an eine Beleimungsvorrichtung angebracht werden, oder welche eine Säuberungsmöglichkeit aufweisen sollen, kann eine reversible Anschlussmöglichkeit durch den Leimanschluss, zum Beispiel durch Gewindeverschraubung, sinnvoll sein. Im Einsatz wird dieser Anschluss jedoch häufig nicht gelöst, so dass die Messvorrichtung für die Dauer des Einsatzes der Beleimungsvorrichtung für die Bodenlegevorrichtung oder die Schlauchmaschine an Ort und Stelle verbleibt.

Das Druckausgleichselement, insbesondere die flexible Membran, dient bei einer erfindungsgemäßen Messvorrichtung dazu, dass ein Druckausgleich zwischen Gasvolumen und Leimvolumen dahingehend stattfinden kann, dass durch entsprechendes Verschieben des Druckausgleichselements, insbesondere der flexiblen Membran, das Gasvolumen beziehungsweise das darin befindliche Gas expandiert beziehungsweise komprimiert werden kann. Damit steht dieser Druckspeicher zur Verfügung, um nach dem Absperren zum Beispiel mit Hilfe eines Absperrventils und dem im Gasspeicher gespeicherten Restdruck die Weiterförderung in erfindungsgemäßer Weise für die Durchführung der Messung zur Verfügung zu stellen. Dafür ist das Druckausgleichselement, insbesondere die flexible Membran, vorzugsweise druckdicht, insbesondere dicht gegen den Leim im Leimvolumen und dicht gegenüber dem Gas im Gasvolumen.

Eine erfindungsgemäße Messvorrichtung kann dahingehend weitergebildet sein, dass der Drucksensor im oder am Gasvolumen des Druckspeichers angeordnet ist. Hierfür ist der Druckspeicher mit direktem Druckkontakt mit dem Gasvolumen verbunden, so dass er den Druck des Gases wahrnehmen kann. Dies führt insbesondere zu dem Vorteil, dass neben einer leichteren Anordenbarkeit auch in einem leimleeren Druckspeicher eine Messung durchgeführt werden kann. Ist das Gasvolumen auf ein Maximum expandiert und dementsprechend das Leimvolumen minimal, so kann man von einem leimleeren Druckspeicher sprechen. In diesem Fall ist die Messung des Drucksensors gleich dem Vorfülldruck, welcher bei circa 10 bar liegt. Wird zusätzlich ein Förderdruck aufgebracht, so entsteht ein höherer Druck der oberhalb des Vorfülldrucks liegt, und welcher sich dadurch einstellt, dass Leim in das Leimvolumen gedrückt und das Gas im Gasvolumen komprimiert wird. Darüber hinaus kann bei einer solchen Anordnung besonders einfach die Befestigung und Anordnung des Drucksensors erfolgen. So kann zum Beispiel ein Anschlussstück insbesondere mit einem Gewinde versehen sein, in welches ein Standarddrucksensor eingesetzt beziehungsweise eingeschraubt werden kann. Dies reduziert die Kosten einer erfindungsgemäßen Messvorrichtung noch weiter.

Selbstverständlich ist es zusätzlich oder alternativ auch möglich, dass bei einer erfindungsgemäßen Messvorrichtung der Drucksensor im oder am Leimvolumen des Druckspeichers angeordnet ist. Darunter ist zu verstehen, dass der Druck nicht im Gas, sondern im Leim gemessen wird. Aufgrund der Tatsache, dass es sich beim Leim vorzugsweise um eine inkompressible Flüssigkeit handelt, entspricht der dort gemessene Druck dem im Gas gemessenen Druck, so dass hier einheitlich oder im Wesentlichen einheitlich von dem Innendruck im Druckspeicher gesprochen werden kann. Diese Ausführungsform ist zwar nicht mehr in der Lage den Vorfülldruck zu messen, ermöglicht aber in besonderen Ausführungsformen eine noch kompaktere Bauweise und stellt eine alternative Ausführungsform einer erfindungsgemäßen Messvorrichtung dar.

Ebenfalls vorteilhaft kann es sein, wenn bei einer erfindungsgemäßen Messvorrichtung das Gasvolumen des Druckspeichers mit einem Gas, insbesondere mit Stickstoff, gefüllt ist, welches bei Druckänderungen nur eine geringe Temperaturänderung erfährt.

Ebenfalls vorteilhaft ist es, wenn bei einer erfindungsgemäßen Messvorrichtung der Drucksensor für die Bestimmung des Innendrucks des Druckspeichers mit einer Referenzgenauigkeit von besser als ungefähr 0,25 %, insbesondere besser als ungefähr 0,1% und bevorzugt besser als ungefähr 0,08 % ausgebildet ist. Ein idealer Wert liegt vorzugsweise bei ungefähr 0,075 % Referenzgenauigkeit für den Drucksensor. Dabei ist unter der Referenzgenauigkeit die Genauigkeit zu verstehen, mit welcher der Innendruck im Druckspeicher gemessen werden kann. Es handelt sich um die maximale Fehlerabweichung bei der Druckmessung vom realen Druck. Je höher die Genauigkeit der Druckmessung ist, desto genauer ist auch die Eingangsgröße für die indirekte Bestimmung des Volumenstroms. Die reduzierte Fehlerwahrscheinlichkeit reduziert damit auch die Fehlerwahrscheinlichkeit bei der Bestimmung des Volumenstroms. Damit kann durch die höheren Anforderungen an den Drucksensor ohne einen zusätzlichen Aufwand in der Bestimmung des Volumenstroms eine verbesserte Genauigkeit in dessen Bestimmung erzielt werden. Insbesondere wenn die Bestimmung möglichst schnell und kostengünstig durchgeführt werden soll, kann durch eine erhöhte Referenzgenauigkeit des Drucksensors zum Beispiel auf Korrekturfaktoren bei der Bestimmung des Volumenstroms des Leims verzichtet werden.

Ebenfalls vorteilhaft ist es, wenn bei einer erfindungsgemäßen Messvorrichtung zumindest ein Temperatursensor für die Bestimmung der Temperatur außerhalb der Messvorrichtung, insbesondere der Umgebungstemperatur, vorgesehen ist. Dieser Temperatursensor ist vorzugsweise an einer der Rohrleitungen auf der Leimseite, zum Beispiel an der Leimleitung der Beleimungsvorrichtung, angeordnet. Der Temperatursensor dient dazu, die tatsächliche Umgebungstemperatur zu messen, zu bestimmen oder abzuschätzen. Auf diese Weise kann bei der Bestimmung mit Hilfe der idealen Gasgleichung der Volumenstrom des Leims noch exakter bestimmt werden. Insbesondere kann hier eine zusätzliche Eingangsgröße für diese Bestimmung zur Verfügung gestellt werden. Alternativ, also ohne einen solchen separaten Temperatursensor, ist es möglich für die Raumtemperatur eine Vorgabe zu wählen, was jedoch zu einer geringeren wenn auch in manchen Ausführungsformen noch akzeptablen Genauigkeit für die Bestimmung des Volumenstroms führen kann.

Weiter kann es vorteilhaft sein, wenn bei einer erfindungsgemäßen Messvorrichtung das Druckausgleichselement zumindest abschnittsweise als flexible Membran ausgebildet ist. Eine derartige Ausbildung bringt eine besonders einfache und kostengünstige Ausführung des Druckausgleichselements mit sich. Die flexible Membran kann zumindest teilweise aus einem elastisch verformbaren Kunststoff gebildet sein. Auch eine solche flexible Membran dient dem Druckausgleich zwischen Gasvolumen und Leimvolumen.

Auch vorteilhaft ist es, wenn bei einer erfindungsgemäßen Messvorrichtung der Leimanschluss wenigstens ein Absperrventil aufweist, um den Leimstrom in der Leimleitung abzusperren. Hierfür kann der Leimschluss zum Beispiel ein T-Rohr oder ein T-Ventil als Absperrventil aufweisen. Damit bildet der Leimanschluss sozusagen einen Teil der Leimleitung aus. Bereits bestehende Anlagen können auf diese Weise besonders einfach und kostengünstig mit einer erfindungsgemäßen Funktionalität ausgestattet werden. Die Einsatzfunktionalität eines solchen Absperrventils wird später noch näher erläutert.

Ebenfalls Gegenstand der vorliegenden Erfindung ist eine Beleimungsvorrichtung für eine Vorrichtung, insbesondere eine Bodenlegevorrichtung oder eine Schlauchmaschine, zur Erzeugung von Säcken oder Sackhalbzeugen. Eine solche Beleimungsvorrichtung zeichnet sich durch zumindest eine Messvorrichtung gemäß der vorliegenden Erfindung aus, welche mit dem Leimanschluss an einer Leimleitung der Beleimungsvorrichtung angeschlossen ist. Mit anderen Worten handelt es sich hier um die Kombination einer erfindungsgemäßen Messvorrichtung mit einer neuen beziehungsweise einer schon bestehenden Beleimungsvorrichtung. Damit ist die nächstgrößere Einheit für die vorliegende Erfindung angegeben. Zur Förderung des Leims ist vorzugsweise eine Verdrängerpumpe vorgesehen, die insbesondere eine Zwangsförderung betreibt. Auf diese Weise wird der Leim automatisch gefördert und die Messvorrichtung kann mit all den voranstehend zu dieser Messvorrichtung beschriebenen Vorteilen, auch die entsprechenden Vorteile für die Beleimungsvorrichtung zur Verfügung stellen.

Die erfindungsgemäße Beleimungsvorrichtung kann dahingehend weitergebildet sein, dass in Strömungsrichtung des Leims in der Leimleitung gesehen vor dem Leimanschluss der Messvorrichtung ein Absperrventil für das Absperren des Leimstroms angeordnet ist. Bei dieser Ausführungsform ist das Absperrventil direkt in der Leimleitung und nicht im Leimanschluss der Messvorrichtung angeordnet. Die Einsatzfunktionalität der beiden Anordnungsvarianten ist jedoch im Wesentlichen identisch. Dieses Absperrventil wird insbesondere für die Durchführung der Messung mit Hilfe der Messvorrichtung verwendet, wie dies bereits weiter oben erläutert worden ist. Wird das Absperrventil abgesperrt, so erfolgt die weitere Förderung des Leims in der nachfolgenden Leimleitung ausschließlich durch den Restdruck in dem Druckspeicher. Dieser speist sich aus dem Druckspeicher der Messvorrichtung. Damit kann eine kontinuierliche Fortführung des Transports des Leims erfolgen und gleichzeitig durch die Druckdifferenz in erfindungsgemäßer Weise wie bereits erläutert über die ideale Gasgleichung eine Bestimmung des Volumenstroms des Leims stattfinden. Ist die Messung beendet, also der Druck zu zwei verschiedenen Zeitpunkten bestimmt worden, wird das Absperrventil wieder geöffnet, so dass der Leimstrom wieder, zum Beispiel durch eine separate Pumpe, zur Verfügung gestellt werden kann. Darüber hinaus wird anschließend der Druckspeicher wieder neu auf den gewünschten Ausgangsdruck, zum Beispiel um die 20 bar, aufgeladen.

Eine erfindungsgemäße Beleimungsvorrichtung kann sich dadurch auszeichnen, dass in Strömungsrichtung des Leims in der Leimleitung gesehen nach dem Leimanschluss der Messvorrichtung ein Druckregelventil für die Regelung des Leimdruckes angeordnet ist. Insbesondere mit Bezug auf die nachfolgende Auftragssituation mit Auftragsventilen in einem Auftragskopf kann hier eine Regelmöglichkeit zur Verfügung gestellt werden, welche insbesondere auf Eingangswerte der Messvorrichtung, also auf den bestimmten Volumenstrom des Leims zurückgreift. Dementsprechend ist sozusagen ein solches Druckregelventil Teil der Regelstrecke.

Darüber hinaus ist es möglich, dass bei einer erfindungsgemäßen Beleimungsvorrichtung der Druckspeicher ein Volumen aufweist, welches derart ausgebildet ist, dass nach der maximalen Leimabgabe während des Messtaktes ein vordefinierter Restdruck als Innendruck im Druckspeicher verbleibt. Dieser vordefinierte Restdruck ist zum Beispiel größer als ein Vorfülldruck, insbesondere zum Beispiel 16 bar. Mit einem Vorfülldruck von 10 bar würde dies zum Beispiel einem Restdruck entsprechen, welcher mindestens 60 % oberhalb des Vorfülldruckes liegt. Bei einer Druckabnahme von zum Beispiel 4 bar würde damit ein Ausgangsdruck beziehungsweise ein Regulärdruck von um die 20 bar vorliegen.

Ebenfalls Gegenstand der vorliegenden Erfindung ist ein Verfahren für die Bestimmung des Volumens von Leim in einer Beleimungsvorrichtung für eine Vorrichtung, insbesondere eine Bodenlegevorrichtung oder eine Schlauchmaschine, zur Erzeugung von Säcken oder Sackhalbzeugen. Ein erfindungsgemäßes Verfahren zeichnet sich dadurch aus, dass der Innendruck in einem Druckspeicher zumindest zu zwei Zeitpunkten gemessen wird, und mit Hilfe von zumindest zwei Druckwerten der zwischen den beiden Zeitpunkten geflossene Volumenstrom von Leim berechnet wird. Ein erfindungsgemäßes Verfahren wird dabei vorzugsweise durch eine erfindungsgemäße Messvorrichtung, insbesondere bei einer erfindungsgemäßen Beleimungsvorrichtung, ausgeführt. Vorzugsweise kann dabei eine isotherme Bestimmung des Volumenstroms durchgeführt werden, welche noch einfacher zu einer Bestimmung des Volumenstroms führt.

Ein erfindungsgemäßes Verfahren kann sich dadurch weiterbilden lassen, dass zumindest einmal ein dritter Druckwert bestimmt wird, welcher dem Fülldruck des Druckspeichers bei Raumtemperatur entspricht. Dieser erhöhte Druckwert wird insbesondere in vordefinierten Abständen, zum Beispiel einmal pro Tag, bestimmt, um mögliche Abweichungen zu bemerken und die Bestimmung des Volumenstroms in entsprechender Weise anzupassen.

Auch kann es vorteilhaft sein, wenn bei einem erfindungsgemäßen Verfahren das Ergebnis der Bestimmung des Volumenstroms mit einem Korrekturwert zu einem korrigierten Volumenstrom umgewandelt wird. Insbesondere bei Einsatzsituationen, welche eine besonders hohe Genauigkeit hinsichtlich des berechneten Volumenstroms erfordern, ist dies von Vorteil. Dabei ist für die isotherme Berechnung und den entsprechenden Korrekturwert vorzugsweise eine Formel beziehungsweise eine Funktion als Korrekturwert sinnvoll. Man kann auch von einer Korrekturfunktion sprechen, welche insbesondere nicht linear verläuft. Damit kann ein Messfehler bei der Bestimmung des Volumenstroms zum Beispiel von einem Bereich zwischen circa 15 % und circa 20 % auf deutlich geringere Werte, zum Beispiel zwischen circa 1 % und circa 2 % reduziert werden. Ein erfindungsgemäßes Verfahren bringt dementsprechend die gleichen Vorteile mit sich, wie sie ausführlich mit Bezug auf eine erfindungsgemäße Messvorrichtung beziehungsweise mit Bezug auf eine erfindungsgemäße Beleimungsvorrichtung erläutert worden sind.

Bei einem erfindungsgemäßen Verfahren ist es weiter vorteilhaft, wenn nach der maximalen Leimabgabe eines Messtaktes ein vordefinierter Restdruck als Innendruck im Druckspeicher verbleibt, wie dies bereits mit Bezug auf die Beleimungsvorrichtung weiter oben erläutert worden ist.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:

Figur 1       eine erste Ausführungsform einer erfindungsgemäßen Beleimungsvorrichtung,

Figur 2       eine weitere Ausführungsform einer erfindungsgemäßen Beleimungsvorrichtung,

Figur 3       die Situation einer erfindungsgemäßen Messvorrichtung mit unterschiedlichen Innendruckzuständen und

Figur 4       eine weitere Ausführungsform einer erfindungsgemäßen Messvorrichtung.

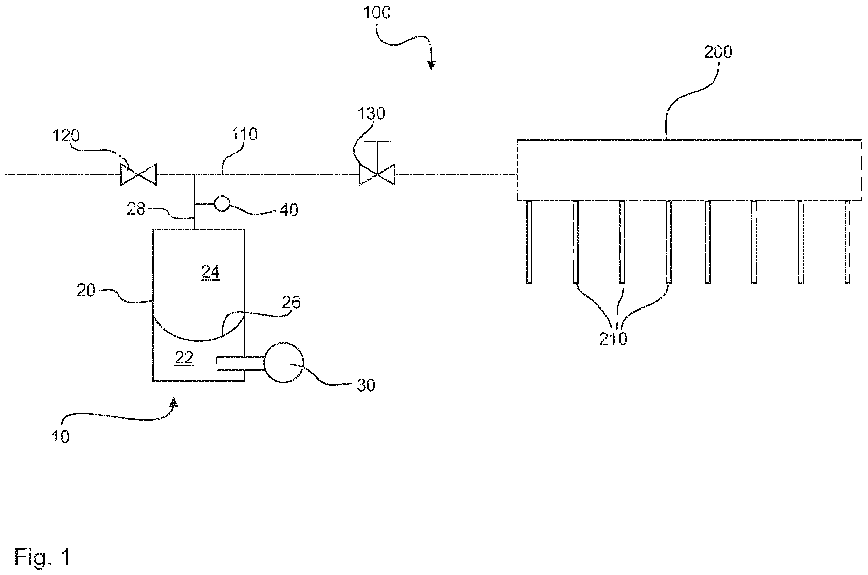

In Fig. 1 ist eine erste Ausführungsform einer erfindungsgemäßen Beleimungsvorrichtung 100 dargestellt, die insbesondere für eine Vorrichtung für die Erzeugung von Säcken oder Sackhalbzeugen ausgelegt ist. Diese kann zum Beispiel eine Bodenlegevorrichtung und/oder eine Schlauchmaschine sein. Hierfür ist ein Auftragskopf 200 mit Auftragsventilen 210 vorgesehen, über welche auf ein entsprechendes Substrat beziehungsweise Material Leim aufgetragen werden soll. Um diesen Leim hinsichtlich seines Volumenstroms regeln zu können, ist ein Druckregelventil 130 in einer Leimleitung 110 der Beleimungsvorrichtung 100 angeordnet. Über dieses Druckregelventil 130 ist der Volumenstrom des Leims regelbar. Um für diese Regelstrecke die gewünschten Messwerte für den Volumenstrom zu erhalten, ist eine Messvorrichtung 10 vorgesehen.

Die Messvorrichtung 10 dieser Beleimungsvorrichtung 100 ist mit einem Druckspeicher 20 ausgestattet. Dieser Druckspeicher 20 weist in seinem Inneren ein Druckausgleichselement 26, insbesondere die flexible Membran, auf, die ein Gasvolumen 22 und ein Leimvolumen 24 flexibel voneinander trennt. Das Leimvolumen 24 ist über einen Leimanschluss 28 mit der Leimleitung 110 verbunden. Das Druckausgleichselement 26, insbesondere die flexible Membran, ist derart flexibel, dass sich die Volumina des Gasvolumens 22 und des Leimvolumens 24 verändern können, sich insbesondere korrelierend verändern. Weiter ist ein Drucksensor 30 vorgesehen, der mit dem Innendruck des Druckspeichers 20 in Kontakt steht und diesen messen kann. Bei dieser Ausführungsform befindet sich der Drucksensor außerhalb des Druckspeichers 20 mit einer Messsonde, die in das Innere des Gasvolumens 22 ragt. So kann bei dieser Ausführungsform auch ein leeres Leimvolumen 24, also der Vorfülldruck des Druckspeichers 20, welcher insbesondere bei 10 bar liegt, gemessen werden.

Das Gasvolumen 22 ist bei dieser erfindungsgemäßen Messvorrichtung 10 vorzugsweise mit einem Gas gefüllt, welches eine geringe Temperaturänderung der Druckänderung aufweist. Das ist vorzugsweise Stickstoff.

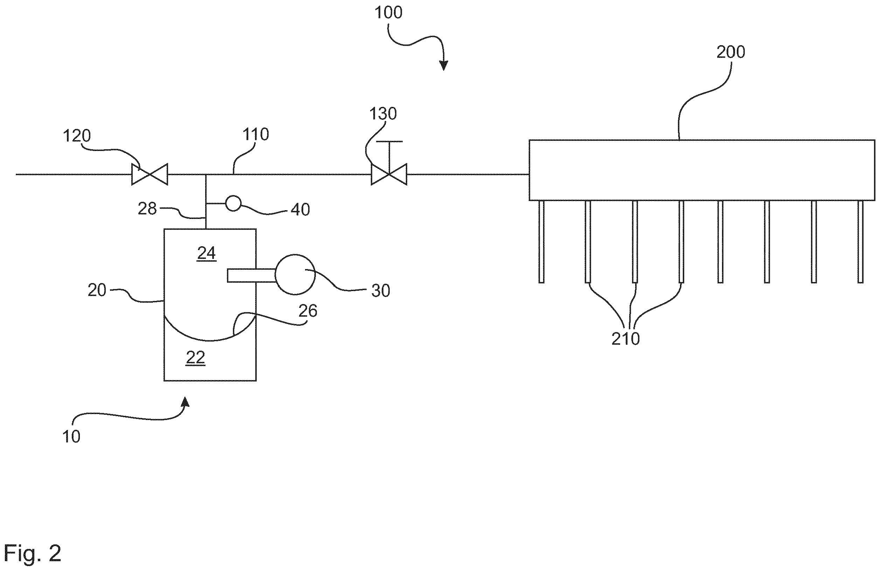

Bei der Ausführungsform der Fig. 1 und 2 ist darüber hinaus die Beleimungsvorrichtung 100 mit einem Absperrventil 120 versehen, welches das Absperren der Leimleitung 110 von einer nicht mehr dargestellten Förderpumpe erlaubt. Wird dieses Absperrventil 120 in die Sperrstellung gebracht, so erfolgt die nachfolgende Förderung von Leim in der Leimleitung 110 stromabwärts des Absperrventils 120 ausschließlich durch den im Druckspeicher 20 gespeicherten Restdruck. Ist zum Beispiel der Restdruck 20 bar, so fällt dieser Druck kontinuierlich durch die Nachförderung ab, das Gasvolumen 22 vergrößert sich, während das Leimvolumen 24 sich verkleinert und sich das Druckausgleichselement 26, insbesondere die flexible Membran, von unten nach oben verschiebt.

Fig. 2 unterscheidet sich von der Ausführungsform der Fig. 1 dadurch, dass ein Drucksensor 30 an anderer Position des Druckspeichers 20 angeordnet ist. Bei dieser Ausführungsform wird der Innendruck im Druckspeicher 20 direkt über das Leimvolumen 24 gemessen. In der Qualität beziehungsweise der Ausführung der Bestimmung liegt jedoch kein Unterschied vor.

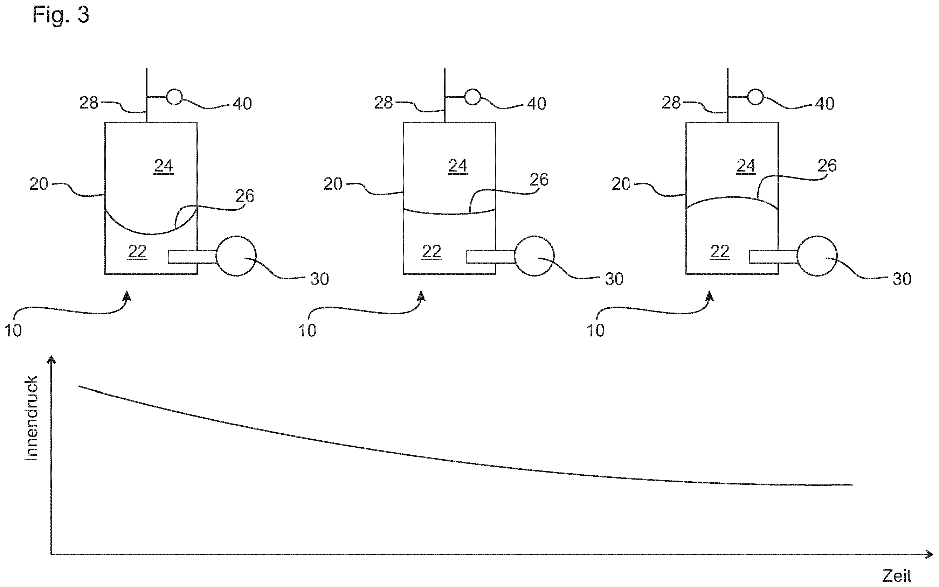

Die Fig. 3 zeigt eine Möglichkeit für die Ausführung der Messung zur Bestimmung des Volumenstroms. Diese erfolgt insbesondere dann, wenn das Absperrventil 120 (siehe Fig. 1 und 2) geschlossen ist. Danach kann die Förderung des Leims nur durch den Restdruck, welcher im Druckspeicher 20 gespeichert ist, erfolgen. Ausgangspunkt hierfür ist zum Beispiel eine Situation wie sie ganz links in Fig. 3 gezeigt ist. Hier ist der Innendruck noch relativ hoch, und liegt zum Beispiel bei ca. 20 bar. Das Gasvolumen 22 ist komprimiert, wodurch sich das Druckausgleichselement 26, insbesondere die flexible Membran, in der untersten Position befindet. Der Leim wird nun weiter gefördert und der Druck im Druckspeicher nimmt in entsprechender Weise ab, wie dies in der Fig. 3 der Innendruckkurve über die Zeit von links nach rechts zu erkennen ist. Durch diese Abnahme expandiert das Gas im Gasvolumen 22 wodurch sich das Druckausgleichselement 26, insbesondere die flexible Membran, nach oben bewegt, bis sie das Ende dieses Messzyklus erreicht hat, wie er ganz rechts in der Fig. 3 dargestellt ist. Das Druckausgleichselement 26, insbesondere die flexible Membran, befindet sich in der obersten Position und der Druck hat abgenommen. Die maximale Druckabnahme eines Messzyklus kann zum Beispiel 4 bar betragen, so dass die Messung zwischen einem ersten Druck von 20 bar und einem Enddruck von ca. 16 bar durchgeführt wird. Wird nun unter isothermen Grundvoraussetzungen die ideale Gasgleichung angewendet, so kann durch die Druckveränderung die Volumenveränderung errechnet werden. Diese Volumenänderung sowie die mitgemessene Zeit zwischen dem Ausgangsdruck und dem Enddruck dienen dazu, einen Volumenstrom für den geförderten Leim während des Messzyklus zu bestimmen. Man kann hier auch von einer indirekten Bestimmung beziehungsweise Messung des Volumenstroms des Leims in der Beleimungsvorrichtung 100 sprechen.

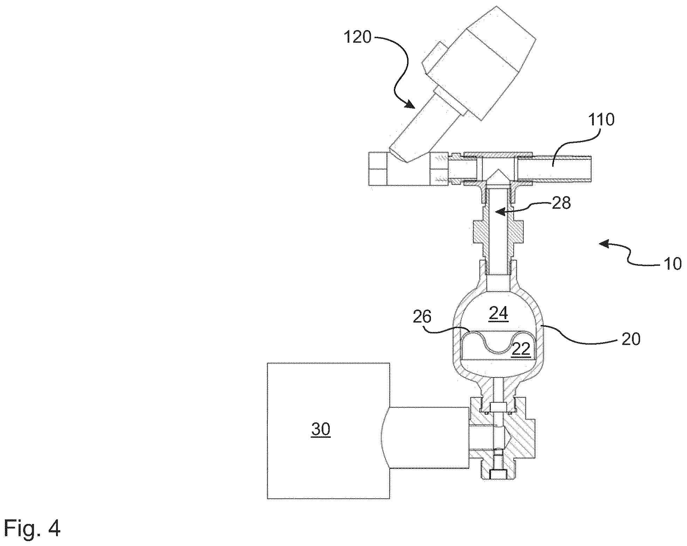

Die Fig. 4 zeigt eine weitere und spezifischere Ausführungsform einer erfindungsgemäßen Messvorrichtung 10, wie sie zum Beispiel in einer Beleimungsvorrichtung 100 gemäß der Fig. 1 und 2 eingesetzt werden kann. Sie funktioniert in gleicher oder ähnlicher Weise wie dies zu Fig. 3 erläutert worden ist. Hier ist ebenfalls ein Absperrventil 120 zu erkennen, welches stromaufwärts eines Leimanschlusses 28 für eine Leimleitung 110 vorgesehen ist. Die Messvorrichtung 10 ist darüber hinaus mit einem Druckspeicher 20 versehen, der ein Leimvolumen 24 und ein Gasvolumen 22 aufweist. Leimvolumen 24 und Gasvolumen 22 sind voneinander durch ein Druckausgleichselement 26, insbesondere die flexible Membran, getrennt. Dieses Druckausgleichselement 26, insbesondere die flexible Membran, ist insbesondere aus einem Kautschukmaterial beziehungsweise einem Kunststoffmaterial ausgebildet. Darüber hinaus ist ein Anschlussstutzen vorgesehen, welcher ein Einschrauben eines Drucksensors 30 ermöglicht, so dass dieser in druckschlüssigem Kontakt mit dem Gasvolumen 22 dieser Messvorrichtung 10 steht.

Die voranstehenden Erläuterungen der Ausführungsformen beschreiben die vorliegende Erfindung nur im Rahmen von Beispielen. Selbstverständlich können technische Merkmale der einzelnen Ausführungsformen, sofern technisch sinnvoll, frei miteinander kombiniert werden, ohne den Rahmen der vorliegenden Erfindung zu verlassen.

| Bezugszeichenliste | |
|---|---|
| 10 | Messvorrichtung |
| 20 | Druckspeicher |
| 22 | Gasvolumen |
| 24 | Leimvolumen |
| 26 | Druckausgleichselement |
| 28 | Leimanschluss |
| 30 | Drucksensor |
| 40 | Temperatursensor |
| 100 | Beleimungsvorrichtung |
| 110 | Leimleitung |
| 120 | Absperrventil |
| 130 | Druckregelventil |
| 200 | Auftragskopf |
| 210 | Auftragsventil |

**Patentansprüche**

1. Messvorrichtung (10) für die Bestimmung des Volumenstroms von Leim in einer Beleimungsvorrichtung (100) für eine Vorrichtung, insbesondere eine Bodenlegevorrichtung oder eine Schlauchmaschine, zur Erzeugung von Säcken oder Sackhalbzeugen,
**gekennzeichnet durch**
einen Druckspeicher (20) mit einem Gasvolumen (22) und einem Leimvolumen (24), welches von dem Gasvolumen (22) **durch** ein Druckausgleichselement (26) getrennt ist, wobei das Leimvolumen (24) einen Leimanschluss (28) für den Anschluss an eine Leimleitung (110) der Beleimungsvorrichtung (100) und der Druckspeicher (20) einen Drucksensor (30) für die Bestimmung des Innendrucks im Druckspeicher (20) aufweist.

2. Messvorrichtung (10) nach Anspruch 1,
**dadurch gekennzeichnet, dass**
der Drucksensor (30) im oder am Gasvolumen (22) des Druckspeichers (20) angeordnet ist.

3. Messvorrichtung (10) nach Anspruch 1,
**dadurch gekennzeichnet, dass**
der Drucksensor (30) im oder am Leimvolumen (24) des Druckspeichers (20) angeordnet ist.

4. Messvorrichtung (10) nach einem der vorangegangenen Ansprüche,
**dadurch gekennzeichnet, dass**
das Gasvolumen (22) des Druckspeichers (20) mit einem Gas, insbesondere mit Stickstoff, gefüllt ist, welches bei Druckänderungen nur eine geringe Temperaturänderung erfährt.

5. Messvorrichtung (10) nach einem der vorangegangenen Ansprüche,
**dadurch gekennzeichnet, dass**
der Drucksensor (30) die Bestimmung des Innendrucks des Druckspeichers (20) mit einer Referenzgenauigkeit von besser als circa 0,25%, insbesondere besser als circa 0,1% und bevorzugt besser als circa 0,08% ermöglicht.

6. Messvorrichtung (10) nach einem der vorangegangenen Ansprüche,
**dadurch gekennzeichnet, dass**
zumindest ein Temperatursensor (40) für die Bestimmung der Temperatur außerhalb der Messvorrichtung (10) vorgesehen ist und/oder das Druckausgleichselement (26) zumindest abschnittsweise als flexible Membran ausgebildet ist.

7. Messvorrichtung (10) nach einem der vorangegangenen Ansprüche,
**dadurch gekennzeichnet, dass**
der Leimanschluss (28) wenigstens ein Absperrventil (120) aufweist, um den Leimstrom in der Leimleitung (110) abzusperren.

8. Beleimungsvorrichtung (100) für eine Vorrichtung, insbesondere eine Bodenlegevorrichtung oder eine Schlauchmaschine, zur Erzeugung von Säcken oder Sackhalbzeugen,
**gekennzeichnet durch**
zumindest eine Messvorrichtung (10) mit den Merkmalen eines der Ansprüche 1 bis 8, welche mit dem Leimanschluss (28) an einer Leimleitung (110) der Beleimungsvorrichtung (100) angeschlossen ist.

9. Beleimungsvorrichtung (100) nach Anspruch 8,
**dadurch gekennzeichnet, dass**
in Strömungsrichtung des Leims in der Leimleitung (110) gesehen vor dem Leimanschluss (28) der Messvorrichtung (10) ein Absperrventil (120) für das Absperren des Leimstroms angeordnet ist.

10. Beleimungsvorrichtung (100) nach einem der Ansprüche 8 oder 9,
**dadurch gekennzeichnet, dass**

in Strömungsrichtung des Leims in der Leimleitung (110) gesehen nach dem Leimanschluss (28) der Messvorrichtung (10) ein Druckregelventil (130) für die Regelung des Leimdruckes angeordnet ist.

11. Beleimungsvorrichtung (100) nach einem der Ansprüche 8 bis 10,
    **dadurch gekennzeichnet, dass**
    der Druckspeicher (20) ein Volumen aufweist, welches derart ausgebildet ist, dass nach der maximalen Leimabgabe während eines Messtaktes ein vordefinierter Restdruck als Innendruck im Druckspeicher (20) verbleibt.

12. Verfahren für die Bestimmung des Volumenstroms von Leim in einer Beleimungsvorrichtung (100) für eine Vorrichtung, insbesondere eine Bodenlegevorrichtung oder eine Schlauchmaschine, zur Erzeugung von Säcken oder Sackhalbzeugen,
    **dadurch gekennzeichnet, dass**
    der Innendruck in einem Druckspeicher (20) zumindest zu zwei Zeitpunkten gemessen wird, wobei mithilfe der zumindest zwei Druckwerte der zwischen diesen beiden Zeitpunkten geflossene Volumenstrom von Leim berechnet wird, wobei insbesondere zumindest einmal ein dritter Druckwert bestimmt wird, welcher dem Fülldruck des Druckspeichers (20) bei Raumtemperatur entspricht.

13. Verfahren nach Anspruch 12,
    **dadurch gekennzeichnet, dass**
    das Ergebnis der Bestimmung des Volumenstroms mit einem Korrekturwert zu einem korrigierten Volumenstrom umgewandelt wird, wobei insbesondere es sich bei dem Korrekturwert um eine Korrekturfunktion handelt.

14. Verfahren nach einem der Ansprüche 12 bis 13,
    **dadurch gekennzeichnet, dass**
    es für eine Messvorrichtung (10) mit den Merkmalen eines der Ansprüche 1 bis 7 oder eine Beleimungsvorrichtung (100) mit den Merkmalen eines der Ansprüche 8 bis 11 durchgeführt wird.

15. Verfahren nach einem der Ansprüche 12 bis 14,
    **dadurch gekennzeichnet, dass**
    nach der maximalen Leimabgabe eines Messtaktes ein vordefinierter Restdruck als Innendruck im Druckspeicher (20) verbleibt.

**Claims**

1. Measuring apparatus (10) for determining the volumetric flow of glue in a gluing device (100) for an apparatus, in particular a bottoming device or tube-making machine, for the production of bags or semi-finished bag products,
   **characterized by**
   a pressure reservoir (20) having a gas volume (22) and a glue volume (24), which is separated from the gas volume (22) by a pressure equalizing element (26), wherein the glue volume (24) has a glue connector (28) for the connection to a glue line (110) of the gluing device (100), and the pressure reservoir (20) has a pressure sensor (30) for determining the internal pressure in the pressure reservoir (20).

2. Measuring apparatus (10) according to Claim 1,
   **characterized in that**
   the pressure sensor (30) is arranged in or on the gas volume (22) of the pressure reservoir (20).

3. Measuring apparatus (10) according to Claim 1,
   **characterized in that**
   the pressure sensor (30) is arranged in or on the glue volume (24) of the pressure reservoir (20).

4. Measuring apparatus (10) according to one of the preceding claims,
   **characterized in that**
   the gas volume (22) of the pressure reservoir (20) is filled with a gas, in particular with nitrogen, which experiences only a low temperature change in the event of pressure changes.

5. Measuring apparatus (10) according to one of the preceding claims,
   **characterized in that**
   the pressure sensor (30) permits the internal pressure of the pressure reservoir (20) to be determined with a reference accuracy of better than about 0.25%, in particular better than about 0.1%, and preferably better than about 0.08%.

6. Measuring apparatus (10) according to one of the preceding claims,
   **characterized in that**
   at least one temperature sensor (40) for determining the temperature outside the measuring apparatus (10) is provided and/or the pressure equalizing element (26) is formed as a flexible diaphragm, at least in some sections.

7. Measuring apparatus (10) according to one of the preceding claims,
   **characterized in that**
   the glue connection (28) has at least one shut-off valve (120) in order to shut off the flow of glue in the glue line (110).

8. Gluing device (100) for an apparatus, in particular a bottoming device or tube-making machine, for the production of bags or semi-finished bag products,
   **characterized by**
   at least one measuring apparatus (10) having the features of one of Claims 1 to 8, which is connected by the glue connection (28) to a glue line (110) of the gluing device (100).

9. Gluing device (100) according to Claim 8, **characterized in that** viewed in the flow direction of the glue in the glue line (110), a shut-off valve (120) for shutting off the flow of glue is arranged before the glue connection (28) of the measuring apparatus (10).

10. Gluing device (100) according to either of Claims 8 and 9, **characterized in that** viewed in the flow direction of the glue in the glue line (110), a pressure regulating valve (130) for regulating the glue pressure is arranged after the glue connection (28) of the measuring apparatus (10).

11. Gluing device (100) according to one of Claims 8 to 10, **characterized in that** the pressure reservoir (20) has a volume which is designed in such a way that, following the maximum discharge of glue during a measuring cycle, a predefined residual pressure remains as internal pressure in the pressure reservoir (20).

12. Method for determining the volume flow of glue in a gluing device (100) for an apparatus, in particular a bottoming device or tube-making machine, for the production of bags or semi-finished bag products, **characterized in that** the internal pressure in a pressure reservoir (20) is measured at at least two times, wherein the volume flow of glue that has flowed between these two times is calculated with the aid of the at least two pressure values, wherein in particular a third pressure value, which corresponds to the filling pressure of the pressure reservoir (20) at room temperature, is determined at least once.

13. Method according to Claim 12, **characterized in that** the result of the determination of the volume flow is converted with a correction value to form a corrected volume flow, wherein the correction value is in particular a correction function.

14. Method according to either of Claims 12 and 13, **characterized in that** it is performed for a measuring apparatus (10) having the features of one of Claims 1 to 7 or a gluing device (100) having the features of one of Claims 8 to 11.

15. Method according to one of Claims 12 to 14, **characterized in that** following the maximum discharge of glue during a measuring cycle, a predefined residual pressure remains as internal pressure in the pressure reservoir (20).

## Revendications

1. Dispositif de mesure (10) pour la détermination du débit volumétrique de la colle dans un dispositif d'encollage (100) pour un dispositif, en particulier un dispositif de pose de fond ou une machine à tuyaux flexibles, pour la production de sacs ou d'ébauches de sacs, **caractérisé par** un accumulateur de pression (20) avec un volume de gaz (22) et un volume de colle (24), qui est séparé du volume de gaz (22) par un élément d'égalisation de pression (26), dans lequel le volume de colle (24) présente un raccord de colle (28) pour le raccordement à une conduite de colle (110) du dispositif d'encollage (100) et l'accumulateur de pression (20) présente un capteur de pression (30) pour la détermination de la pression interne dans l'accumulateur de pression (20).

2. Dispositif de mesure (10) selon la revendication 1, **caractérisé en ce que** le capteur de pression (30) est disposé dans ou sur le volume de gaz (22) de l'accumulateur de pression (20).

3. Dispositif de mesure (10) selon la revendication 1, **caractérisé en ce que** le capteur de pression (30) est disposé dans ou sur le volume de colle (24) de l'accumulateur de pression (20).

4. Dispositif de mesure (10) selon l'une quelconque des revendications précédentes, **caractérisé en ce que** le volume de gaz (22) de l'accumulateur de pression (20) est rempli avec un gaz, en particulier avec de l'azote, qui ne subit qu'une faible variation de température lors de variations de pression.

5. Dispositif de mesure (10) selon l'une quelconque des revendications précédentes, **caractérisé en ce que** le capteur de pression (30) permet la détermination de la pression interne de l'accumulateur de pression (20) avec une précision de référence supérieure à environ 0,25 %, en particulier supérieure à environ 0,1 % et de préférence encore supérieure à environ 0,08 %.

6. Dispositif de mesure (10) selon l'une quelconque des revendications précédentes, **caractérisé en ce qu'**il est prévu au moins un capteur de température (40) pour la détermination de la température à l'extérieur du dispositif de mesure (10) et/ou l'élément d'équilibrage de la pression (26) est réalisé au moins en partie sous forme de membrane flexible.

7. Dispositif de mesure (10) selon l'une quelconque des revendications précédentes, **caractérisé en ce que** le raccord de colle (28) présente au moins une soupape d'arrêt (120), destinée à arrêter le flux de colle dans la conduite de colle (110).

8. Dispositif d'encollage (100) pour un dispositif, en particulier un dispositif de pose de fond ou une machine à tuyaux flexibles, pour la production de sacs ou d'ébauches de sacs, **caractérisé par** au moins un dispositif de mesure (10) ayant les caractéristiques d'une des revendications 1 à 8, qui est raccordé au raccord de colle (28) sur une conduite de colle (110) du dispositif d'encollage (100).

9. Dispositif d'encollage (100) selon la revendication 8, **caractérisé en ce que**, considérée dans la direction d'écoulement de la colle dans la conduite de colle (110), une soupape d'arrêt (120) est disposée avant le raccord de colle (28) du dispositif de mesure (10) pour l'arrêt du flux de colle.

10. Dispositif d'encollage (100) selon une des revendications 8 ou 9, **caractérisé en ce que**, considérée dans la direction d'écoulement de la colle dans la conduite de colle (110), une soupape de réglage de pression (130) pour la régulation de la pression de la colle est disposée après le raccord de colle (28) du dispositif de mesure (10).

11. Dispositif d'encollage (100) selon l'une quelconque des revendications 8 à 10, **caractérisé en ce que** l'accumulateur de pression (20) présente un volume, qui est réalisé de telle manière que, après la délivrance maximale de colle pendant un cycle de mesure, il reste une pression résiduelle prédéfinie comme pression interne dans l'accumulateur de pression (20).

12. Procédé pour la détermination du débit volumétrique de colle dans un dispositif d'encollage (100) pour un dispositif, en particulier un dispositif de pose de fond ou une machine à tuyaux flexibles, pour la production de sacs ou d'ébauches de sacs, **caractérisé en ce que** l'on mesure la pression interne dans un accumulateur de pression (20) au moins à deux instants, dans lequel on calcule à l'aide desdites au moins deux valeurs de pression le débit volumétrique de colle écoulé entre ces deux instants, dans lequel on détermine en particulier au moins une fois une troisième valeur de pression, qui correspond à la pression de remplissage de l'accumulateur de pression (20) à la température ambiante.

13. Procédé selon la revendication 12, **caractérisé en ce que** l'on convertit le résultat de la détermination du débit volumétrique avec une valeur de correction en un débit volumétrique corrigé, dans lequel la valeur de correction est en particulier une fonction de correction.

14. Procédé selon une des revendications 12 à 13, **caractérisé en ce qu'**on le met en oeuvre pour un dispositif de mesure (10) ayant les caractéristiques d'une des revendications 1 à 7 ou pour un dispositif d'encollage (100) ayant les caractéristiques d'une des revendications 8 à 11.

15. Procédé selon l'une quelconque des revendications 12 à 14, **caractérisé en ce que**, après la délivrance maximale de colle d'un cycle de mesure, il subsiste une pression résiduelle prédéfinie comme pression interne dans l'accumulateur de pression (20).

Fig. 1

Fig. 2

EP 2 790 841 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005002838 A